# EUROPEAN PATENT APPLICATION

(11) **EP 4 848 213 A1**
(43) Date of publication of application: **02.12.2026**
(21) Application number: 26180615.2
(22) Date of filing: 22.05.2026
(51) Int. Cl.: G06T 11/10, G06N 3/045, G06T 11/60

(54) **MODIFYING AN ITEM USING A MODEL-GENERATED ACTION PLAN**

(30) Priority: 30.05.2025 US 202519224583
(71) Applicant: Microsoft Technology Licensing, LLC, Redmond, Washington 98052-6399 (US)
(72) Inventor: FAYYAZ, Mohsen, Redmond, 98052-6399 (US); SOMMERLADE, Eric Chris Wolfgang, Redmond, 98052-6399 (US); CAMERON, Pashmina Jonathan, Redmond, 98052-6399 (US); WAGLE, Justin James, Redmond, 98052-6399 (US); HAWKINS, Brian Timothy, Redmond, 98052-6399 (US)
(74) Representative: Murgitroyd & Company

(57) **Abstract**

A technique generates an action plan to modify an original item using a plan-generating machine-trained model ("model"), given the original item and an input instruction. The action plan specifies a sequence of actions to be performed on the original item. The technique identifies modification programs to perform the actions in the action plan, and then executes the modification programs to produce a revised item. The technique also calls a suggestion-generating model at the start of the process to generate suggestions as to how the original item may be modified. The technique also calls the suggestion-generating model to generate suggestions upon presentation of the revised item; here, the suggestions identify how the revised item may be further edited. According to another feature, the plan-generating model is trained to correctly generate and carry out action plans that involve relative changes to poses of objects in images.

## Description

### BACKGROUND

Some machine-trained models ("models") are capable of modifying items when given explicit instructions as to how the items should be changed. For instance, some diffusion models are successful in modifying the appearance of objects in images when the input instructions explicitly identify what objects should be changed (e.g., using manually drawn masks) and how the objects should be transformed (e.g., by specifying that the objects should be removed or replaced with other objects). However, machine-trained models are not well equipped to handle many of the more complex ways in which items may be transformed. Efforts to improve the versatility and accuracy of machine-trained models often give rise to large models that consume a significant amount of resources.

### SUMMARY

The scope of the invention is in accordance with the appended claims.

A technique is described herein for generating, in a resource efficient manner, an action plan to modify an original item using a plan-generating model, given the original item and an input instruction. The action plan specifies a sequence of actions to be performed on the original item. The technique automatically identifies modification programs to perform the actions in the action plan, and then executes the modification programs to produce a revised item. The technique is applicable to any item that includes any type or combination of types of content (e.g., image content, video content, audio content, and/or text content).

According to another illustrative aspect, the technique uses one or more preprocessing tools to interpret the original item, including one or more item encoders, an object detector, an image segmentation model, a pose detector, etc. These preprocessing tools assist the plan-generating model in generating an accurate plan to modify the original image.

According to another illustrative aspect, the technique calls a suggestion-generating model at the start of its process to generate suggestions as to how the original item may be modified. The technique also calls the suggestion-generating model to generate suggestions upon presentation of the revised item; here, the suggestions identify how the revised item may be further edited.

According to another illustrative aspect, the plan-generating model is trained based on a synthetic set of training examples. At least some of the training examples guide a training system in executing tasks that involve changing the pose of one or more objects in an image. This training improves the accuracy of the plan-generating model.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF DRAWINGS

Fig. 1 shows an editing system for creating and executing an action plan for the purpose of editing an original item.
Figs. 2-4 is an example of operations performed by the editing system of Fig. 1.
Fig. 5 shows a training system for training parameters of the editing system of Fig. 1.
Fig. 6 shows a first overview of the operation of the editing system of Fig. 1.
Fig. 7 shows a second overview of the operation of the editing system of Fig. 1.
Fig. 8 shows an overview of the operation of the training system of Fig. 5.
Fig. 9 shows one implementation of a preprocessing system used by the editing system of Fig. 1.
Fig. 10 shows a convolutional neural network that is capable of carrying out one or more operations in the editing system of Fig. 1.
Fig. 11 shows a transformer-based neural network that is capable of carrying out one or more operations in the editing system of Fig. 1.
Fig. 12 shows an illustrative diffusion model that is capable of carrying out one or more operations in the editing system of Fig. 1.
Fig. 13 shows computing equipment that, in some implementations, is used to implement the editing system and training system of Figs. 1 and 5.
Fig. 14 shows an illustrative type of computing system that, in some implementations, is used to implement any aspect of the features shown in the foregoing drawings.

The same numbers are used throughout the disclosure and figures to reference like components and features.

### DETAILED DESCRIPTION

An editing system is described herein for generating an action plan to modify an original item using a plan-generating model, given the original item and an input instruction. The action plan specifies a sequence of actions to be performed on the original item. The editing system automatically identifies modification programs to perform the actions in the action plan, and then executes the modification programs to produce a revised item.

Various features contribute to the accuracy and flexibility of the editing system compared to other machine-trained models. First, the plan-generating model works in cooperation with various preprocessing tools, such as an image encoder, object detector, etc. Information provided by these tools enables the plan-generating model to understand the composition of the item, which, in turn, enables the plan-generating model to produce a more accurate plan to revise the item. Second, the plan-generating model works in cooperation with a suggestion model that assists a user in determining how an original item (or a revised item) can be modified. Third, the plan-generating model is trained to correctly interpret and carry out instructions for which other editing tools have traditionally failed. One such type of instruction involves changes to poses in images, including instructions that involve movement of one object relative to another object. If deemed unsatisfactory, the plan-generating model generates another action plan to adjust the pose(s) in the image. This type of request has been heretofore difficult to carry out because it requires correctly interpreting an image and a user's request, and correctly determining what aspects of the image should change to satisfy the request.

The editing system is also resource efficient for at least three reasons. First, the editing system is able to refine its results over any number of iterations, which reduces the need for a larger model that is built to correctly carry out an instruction in a single pass. Second, the plan-generating model is trained based on a set of training examples that targets one or more classes of complex tasks. This training reduces the number of iterations that need to be performed to achieve satisfactory results. Third, the editing system relies, at least in part, on existing preprocessing tools and/or modification programs having pretrained weights. This reduces the need for an execution platform to download specialized programs that work in conjunction with the plan-generating model. It also eliminates the need to train these specialized programs for use in connection with the plan-generating model. Further, the editing system is scalable because it adopts a modular framework, allowing for the introduction of new models without necessitating the retraining of existing models.

The above technical features enable the production of a relatively small editing system that is capable of being executed on a user computing device. Executing editing functions in a local fashion is beneficial because: a) it makes efficient use of resources (compared to running a larger server-side editing tool); b) it helps safeguard private data by processing the data in local fashion; c) it reduces latency by eliminating or reducing interaction with. a server-side system; and d) it provides editing capability when a network connection to a server-side system is not available.

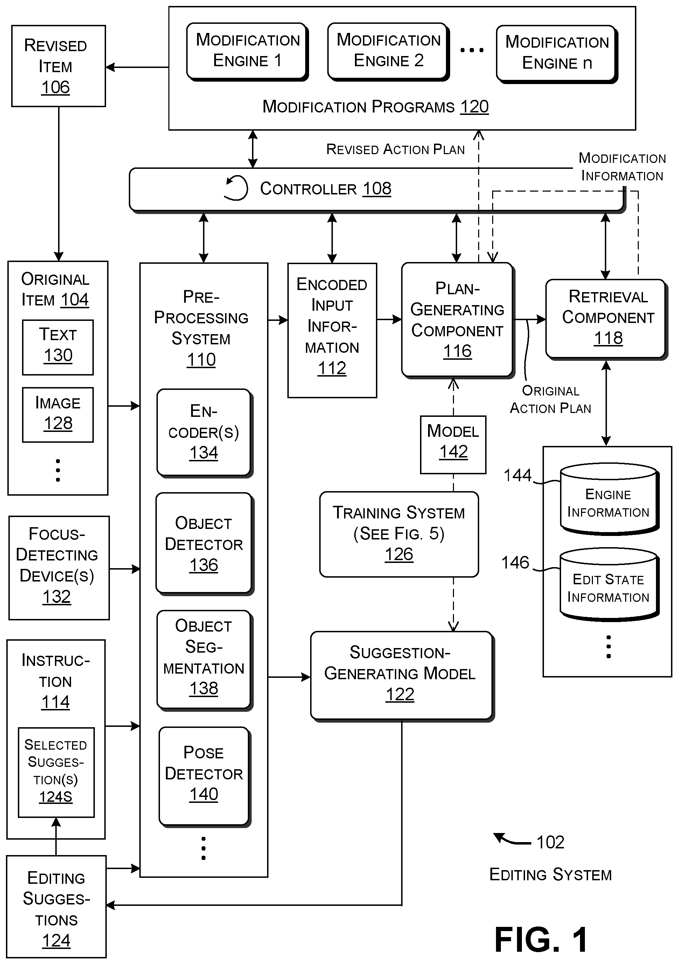

With the above introduction, Fig. 1 shows an editing system 102 for creating and executing an action plan to edit an original item. Examples will be presented below for the case in which the original item is an original image. However, the principles set forth herein are applicable to the case in which the original item includes any combination of content types, including text content, image content, graphics content, video content, and/or audio content, etc.

The editing system 102 includes plural computer-implemented agents that cooperate to transform an original item 104 (e.g., an original image) into a revised item 106 (e.g., a revised image) in one or more iterations. A controller 108 orchestrates individual operations in the transformation. In some implementations, the controller 108 is a computer program that includes program instructions that implement a state machine. The state machine governs movement between states, for different input conditions. Alternatively, or in addition, the controller 108 is a machine-trained model ("model"), in which control is governed by machine-trained weights.

From a broad perspective, the controller 108 first instructs a preprocessing system 110 to encode an input request into encoded input information 112. The request includes the original item 104, and, in some examples, an instruction 114. The instruction 114 specifies a desired transformation to be performed on the original item 104. The controller 108 then instructs a plan-generating component 116 to map the encoded input information 112 into an action plan. In this context, the encoded input information 112 is also referred to as model input information herein. The action plan specifies one or more actions that, taken together, will perform the requested transformation. Next, the controller 108 instructs a retrieval component 118 to identify modification information that identifies one or more modification programs that are capable of performing the action(s) in the action plan. The controller 108 then requests the plan-generating component 116 to generate a revised action plan based on the modification information. This operation produces a revised action plan. Finally, the controller 108 instructs one or more modification programs, in a collection of available modification programs 120, to carry out the actions in the revised action plan. This produces the revised item 106 (e.g., a revised image). The editing system 102 is capable of repeating the above process one or more times until a satisfactory revised image is obtained.

In some implementations, a suggestion-generating model 122 generates suggestions 124 at various stages in the operation of the editing system 102. For example, the suggestion-generating model 122 generates one or more suggestions that identify how the original item 104 may be transformed. The suggestion-generating model 122 also generates one or more suggestions upon presentation of the revised item 106. Each suggestion identifies how the original item 104 may be transformed. In this role, the suggestion-generating model 122 operates as a critic, assessing whether a transformation has been carried out correctly and/or making independent recommendations as to how to improve the revised item. Upon selection of any of the suggestions, the controller 108 adds the suggestion to the instruction 114.

A training system 126 trains one or more models of the editing system 102 based on a set of training examples. In some implementations, the training examples include at least one subset of training examples that target a complex transformation task. One such complex transformation task involves moving a first object and/or a second object in an image relative to each other. For example, the first object and the second object are first and second body parts.

Section A provides further details regarding the individual components of the editing system 102. Section B provides further details regarding the training system 126. Section C describes flowcharts that provide overviews of the operation of the editing system 102 and the training system 126. Section D provides details regarding illustrative models that can be used to implement individual components of the editing system 102 and training system 126. Section E provides information regarding computing equipment that is used to implement aspects of the editing system 102 and the training system 126.

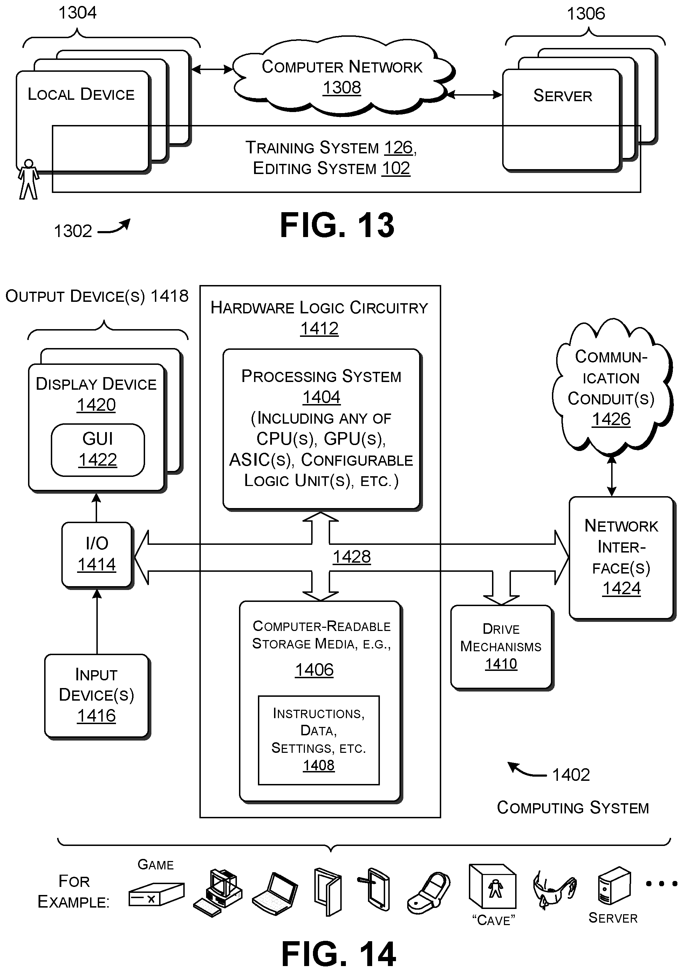

The following terminology is relevant to some examples presented below. In some examples, a "machine-trained model" or "model" refers to computer-implemented logic for executing a task using machine-trained weights that are produced in a training operation. A language model is a particular type of machine-trained model that is trained, in part, to predict a next token, given one or more preceding tokens. In some examples, a "parameter" refers to any type of parameter value (e.g., a filter weight or a bias value) that is iteratively produced by the training operation. In some examples, a "token" refers to a unit of information processed by a machine-trained model, such as a word or a part of a word. In some examples, a tokenizer produces the tokens, but an item (e.g., a text passage) is said to be composed of tokens in a general sense (in which "token" is a synonym of "part"), irrespective of when and where those tokens are actually produced. In some examples, a "prompt" refers to a sequence of tokens submitted to a machine-trained model. In some examples, a "distributed vector" or "embedding" expresses the semantic content of an information item by distributing information over its k dimensions. In some examples, terms such as "component," "module," "engine," and "tool" refer to parts of computer-based technology that perform respective functions. Figs. 13 and 14, described below, provide examples of illustrative computing equipment for performing these functions

### A. Illustrative Editing System

The operations of the editing system 102 will be described below in an illustrative order in which they are performed in some examples. The editing system 102 first receives the original item 104 and the instruction 114. The original item 104 includes any combination of types of content, including an image 128, or a passage of text 130, or instance of video data, or an instance of audio data, etc., or any combination thereof. The instruction 114 includes text and/or audio data that specifies a desired transformation to be performed on the original item 104. In some examples, the editing system 102 also receives additional contextual information generated by one or more focus-detecting devices 132. Illustrative focus-detecting devices 132 include eye-tracking devices, head-tracking devices, input device-tracking devices (e.g., mouse-tracking devices), etc. These devices generally provide information regarding a real object or screen object to which the user is currently directly attention. For instance, suppose that the user inputs an image and provides the instruction, "enlarge the person in the background of this image." The focus-detecting devices 132, if used, provides information regarding the background object in the image to which the user may be referring. In some examples, this information is determined based on the positions of the user's eyes, head, and/or interaction with input devices.

The preprocessing system 110 transforms the input information into encoded information, as referred to herein as model input information. More specifically, the preprocessing system 110 includes one or more encoders 134 that map different types of content into respective instances of encoded information. For example, the encoders 134 include an image encoder that maps the image 128 into encoded image information, a text encoder that maps the text 130 into encoded text information, and so on. In some cases, an encoder includes a tokenizer that partitions an input item into tokens, and a neural network of any type (e.g., a transformer-based neural network or convolutional neural network) that maps the tokens into respective embeddings (e.g., distributed vectors). Examples of a publicly available image and text encoders include the CLIP-based encoders developed OPEN AI of San Francisco, California, which are trained using contrastive learning.

The preprocessing system 110 also includes various other models that perform more specialized analysis of the original item 104. For example, with respect to the input image 128, the preprocessing system 110 includes any of an object detector 136 for detecting objects in the input image 128, an object segmentation model 138 for segmenting objects in the input image 128, a pose detector 140 for detecting the poses of objects in the image 128, and so on. With respect to the text 130, the preprocessing system 110 includes an entity detector (not shown) for detecting entities in the text 130, a sentiment detector (not shown) for detecting sentiments expressed by the text 130, and so on.

In some examples, the preprocessing system 110 includes, at least in part, publicly available models. Examples of object detectors include a YOLO (You Only Look Once) model, a version of which is provided by ULTRALYTICS of Frederick, Maryland, a DETR (Detection Transformer) model developed by META PLATFORMS, INC. of Menlo Park, California, etc. model, an R-CNN model developed by META PLATFORMS, INC., and so on. One example of an object segmentation model 138 is the Segment Anything (SAM) model developed by META PLATFORMS, INC. Examples of pose detectors include any YOLO pose detection model, a version of which is provided by ULTRALYTICS, Openpose, developed by Carnegie Mellon University of Pittsburg, Pennsylvania, DensePose developed by META PLATFORMS, INC., etc. Further, suites of vision-based machine-trained models are available at MICROSOFT AZURE, administered by MICROSOFT CORPORATION of Redmond, Washington, and HUGGING FACE, INC. of New York, New York.

In some implementations, the plan-generating component 116 uses a plan-generating model 142 to map the encoded input information into an action plan. In some examples, the plan-generating model 142 is a language model that autoregressively generates the action plan. Autoregressive means that the language model generates a passage of text in token-by-token fashion. That is, in each pass, the language model maps a sequence of input tokens to a predicted next token. In the next pass, the language model appends the predicted next token to the end of the prior sequence of input tokens. This process continues until the language model predicts a stop token. In other implementations, the language model operates non-autoregressively (e.g., in a single pass or based on some other control flow).

As stated above, the action plan specifies a sequence of one or more actions to be performed on the original item 104. For example, the sequence of actions may specify that the color of a particular object in the input 128 should be changed to red, and that another object should be added to the image 128, etc. At this stage, the action plan is an original action plan that does not specify what modification programs should be called to carry out the specified operation. Further, the order specified in the original action plan is preliminary or tentative. The order may change upon associating the actions with modification programs. This is because the modification programs may have input/output requirements that necessitate a reordering of actions specified in the original action plan. In some cases, an order refers to how any two or more actions are ordered in series. Alternatively, or in addition, the order may involve performing two or more actions in parallel.

The retrieval component 118 associates each action specified in the original plan with a modification program that is capable of performing the action. In some implementations, the retrieval component 118 performs a lookup operation to execute this task. That is, the retrieval component 118 converts text that describes an action into a source embedding (e.g., using a neural network of any type), and then searches a data store 144 to find a target embedding that is closest to the source embedding in vector space. Proximity between any to vectors can be computed using any distance metric, such as cosine similarity. Each target embedding is produced in a similar manner, e.g., by using a neural network to map a description associated with a particular modification program into target embedding. The closest matching target vector is associated with the modification program having a description that is semantically most related to the description of the action specified in the action plan. In some implementations, the retrieval component 118 uses the Approximate Nearest Neighbor (ANN) technique to expedite its search through available target embeddings in the data store 144.

Upon identifying a matching modification program, the retrieval component 118 then retrieves additional information about the matching modification program. For example, the retrieval component 118 retrieves information regarding the application programming interface (API) associated with the modification program. The API specifies, for example, the input variables that are required by the modification program, the output values that are generated by the modification program, and the formats of the input values and output values. The information produced by the retrieval component is collectively referred to herein as modification information.

Other implementations pair each action with a modification program in other ways. For instance, in another implementation, a generative model (such as a language model) is trained to generate the modification information without performing a lookup function. A verification component subsequently verifies that the modification information identifies valid modification programs and describes valid APIs.

In some implementations, the suggestion-generating model 122 is implemented by another language model that generates one or more suggestions based on the original item 104 (or the revised item 106, once generated). That is, in this implementation, the plan-generating model 142 and the suggestion generating model 122 are two different language models that are fine-tuned to perform two distinct tasks: generating an action plan in the case of the plan-generating model 142 and generating suggestions in the case of the suggestion-generating model 122. In other implementations, the plan-generating model 142 is the same language model as the suggestion-generating model 122. This multi-purpose language model provides different kinds of responses based on the manner in which it is prompted. A language model is "prompted" to perform a specific task based on the instructions that are fed thereto in a system prompt.

Any suggestion generated by the suggestion-generating model 122 is based on the characteristics of the input item (e.g., the original item 104 or the revised item 106). Each suggestion is also based on knowledge that is embodied in the suggestion-generating model's weights as to how other users have chosen to transform items having similar characteristics to the input item under consideration (e.g., the original item 104 or the revised item 106). In some implementations, the suggestion-generating model 122 is also trained to produce suggestions that are influenced, in part, by the user's input request. For example, the user may input an ambiguous request, such as "make the background tree larger"; here a suggestion may identify a specific background tree in the input image 128 and/or a proposed placement of the background tree.

In some implementations, the suggestion model 122 also receives input information that describes the prior preferences of an individual user or group of users. For example, the suggestion model 122 may receive input information that indicates that a user frequently removes small background objects from images.

As a next operation, the controller 108 feeds the original action plan and the modification information back into the plan-generating component 116. In response, the plan-generating component 116 generates an updated or revised action plan. The action plan is revised insofar as it now incorporates information about: a) the identity of each modification program to be called to carry out each action; and b) the input values to be fed to each modification program. At this stage, the plan-generating component 116 also populates the selected functions with specific values. The plan-generating component 116 extracts these values from the input information fed to the plan-generating component 116 (e.g., which originate from the query 104). Alternatively, the plan-generating component 116 generatively produces the values based on the input information. If appropriate, the revised action plan also revises the order in which actions are performed. This reordering may be based on the input/output requirements of the selected modification programs.

The suite of available modification programs 120 includes any machine-trained models and/or rule-based program for transforming the original item. For example, with respect to the input image 128, the modification programs 120 include any type of image-synthesizing model (a diffusion model, generative adversarial network (GAN), a transformer-based model, etc.) that is capable of adding a new object to the input image 128, deleting an existing an object in the input image 128, changing an appearance of an existing object in in the input image 128, and so on. Providers of diffusion models include STABILITY AI of London, England, and OPEN AI (e.g., with respect to its DALL-E model). Other modification programs are trained to perform tasks of narrower focus, such as changing the contrast of the input image 128, removing noise from the input image 128, cropping the input image 128, counting the number of objects in the input image 128, etc.

With respect to the text domain, the modification programs 120 include one or more language models for transforming the text 130 in specified ways. For example, the modification programs 120 include a language model that is trained to summarize a passage or text, change the style of a passage of text, remove offending parts of a passage of text, and so on. Alternatively, or in addition, the modification programs 120 includes one or more general-purpose language models, each of which is trained to perform plural tasks, as is the case with the GPT family of language models developed by OPEN AI.

In some examples, a computing system (not shown) that implements the editing system 102 may already have access to some of the modification programs 120. For example, the computing system includes local storage that already has copies of at least some of the modification programs 120. In other cases, the computing system downloads a copy of a selected modification program from one or more server-implemented systems, or interacts with a server-implemented modification program without downloading it.

The controller 108 instructs the selected modification programs to perform their respective transformations on the original item 104, to produce the revised item 106. The editing system 102 then presents the revised item 106 to the user, e.g., by displaying a revised image or a revised passage of text.

The user may instruct the editing system 102 to repeat the above-described operations one or more times. For example, the user may initiate another iteration of the above-described operations by inputting a new instruction. The suggestion-generating model 122 also automatically generates one or more suggestions based on the revised item 106. Each such suggestion specifies additional processing that may be applied to the revised item 106. The user remains free to select one or more of these suggestions, upon which the suggestion (or suggestions) is/are added to the input instruction.

The editing system 102 also maintains state information in a data store 146 that describes what actions have been performed to the original item 104 over one or more iterations of the above-described process flow. The state information also describes the instructions given to the editing system 102, the prompts that have been fed to the plan-generating model 142 and the suggestion-generating model 122, the action plans and suggestions that have been generated by the plan-generating model 142 and suggestion-generating model 122, and the overall results of the transformations performed by the selected modification programs.

In some implementations, the data store 146 also stores preference information that describes the preferences of a user or group of users over plural editing sessions. For example, the preference information indicates that a particular user frequently adjusts the brightness of images. The plan-generating model 142 and/or the suggestion-generating model 122 use this information in generating action plans and suggestions, respectively.

In some implementations, the controller 108 is configured to construct system prompts based, in part, on the state information. Each system prompt instructs a language model how it should respond to information that is fed to it. For example, in a first iteration of the above-descried operation, the controller 108 provides a system prompt to the plan-generating model 142 that it instructs it to generate an original action plan. After retrieval of the modification program, the controller 108 provides a system prompt to the plan-generating model 142 that instructs it to generate a revised action plan. Upon a subsequent iteration of the above-described operations, the controller 108 generates system prompts that provide a historical summary of previous actions that have been applied to the original item 104. The controller 118 prompts the suggestion-generating model 122 in a similar state-specific manner.

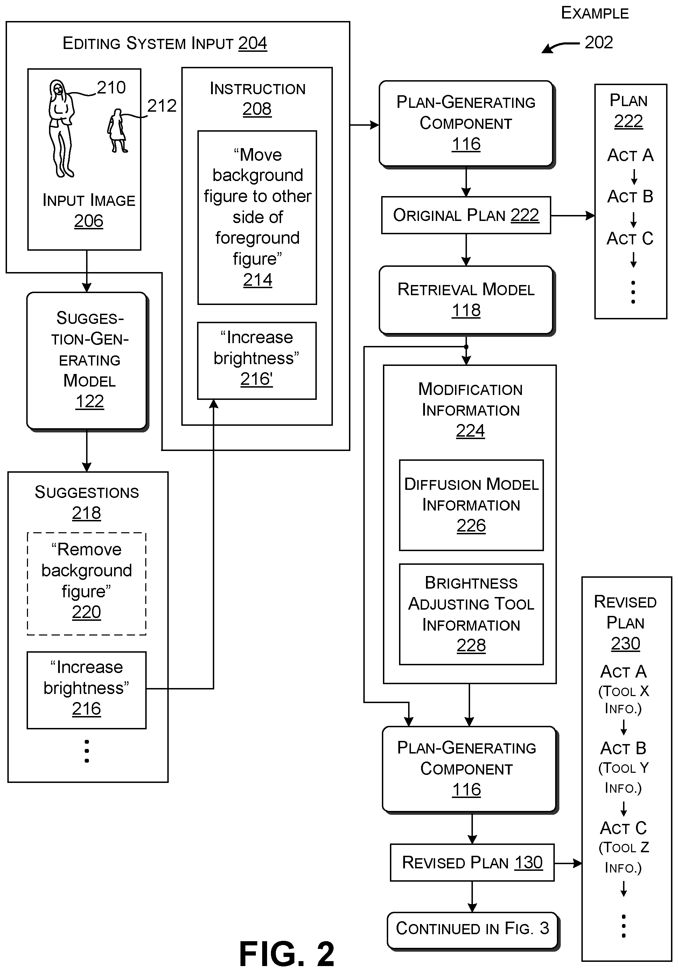

Figs. 2-4 show an example 202 of the operation of the editing system 102. Starting with Fig. 2, an input 204 to the editing system 102 includes an input image 206 and input instruction 208. The input image 206 shows a foreground person 210 and a background person 212. The input instruction 208 includes a first instruction 214 that is manually input by the user, which specifies: "Move background figure to other side of foreground figure." The input instruction 208 includes a second instruction 216' that corresponds to one of two suggestions 218 produced by the suggestion-generating model 122. The other suggestion 220, which has not been selected, specifies: "Remove background figure." The editing system 102 receives the user's selection in any manner, e.g., by detecting the user's selection of the suggestion 216 in a list of suggestions displayed on a user interface presentation.

In some implementations, the suggestion-generating model 122 generates the two suggestions 218 based on its trained weights, which, in turn, reflect empirical knowledge gained through a large number of prior transformations performed by the editing system 102 or some other kind of editing system. Each example identifies an input image and an instruction to modify the input image in a particular way. For instance, some examples describe episodes in which users have removed small background objects from images. Other examples show episodes in which users have increased the brightness of darkened images. In generating the suggestions, the suggestion-generating model 122 implicitly mirrors patterns it has observed in one or more examples on which it was trained.

The preprocessing system 110 (not shown in Fig. 2) encodes the input image 206 and the instruction 208. The preprocessing system 110 further uses the object detector 136 to detect the two people in the input image 206. In some implementations, the object detector 136 formulates its results as a bounding box that identifies the location of each object, together with classification information that identifies the type of object that has been detected. The segmentation model 138 segments the identified objects in the input image 206, and the pose detector 140 identifies the poses of the two figures in the input image 206. The plan-generating component 116 uses some or all of the encoded input information produced by the preprocessing system 102, depending on the specific nature of the instruction 208. Generally, the plan-generating model 116 is able to produce a more accurate plan based on the higher-level analysis performed on the preprocessing system 110 (compared to, for instance, just relying on the raw embeddings produced by the encoders 134). This is one technical benefit of front-loading some of the image analysis in the preprocessing system 110.

The plan-generating component 116 generates an original action plan 222 that specifies a series of actions (generically referred to as Action A, Action B, Action C, etc. in Fig. 2). The retrieval model 118 identifies modification information 224 based on the original action plan 222. The modification information 224 includes two information items (226, 228) that identify two modification programs that are suitable for carrying out the actions in the original action plan 222. The modification information 224 also includes additional information regarding each modification program, such as information regarding the input variables received by the modification programs and the output variables produced by the modification programs. In the example 202, the first modification program is a diffusion model, and the second modification program is a computer program for adjusting the brightness of the image 206.

Next, the plan-generating component 116 maps the original action plan 222 and the modification information 224 to a revised action plan 230. The revised action plan 230 is a modified version of the original action plan 222, now including information regarding the two modification programs to be invoked and how to interact with the two modification programs. At this stage, the plan-generating component 116 also supplies values for input to the modification programs, e.g., by extracting the values from the input instruction 116 and/or generatively producing the values.

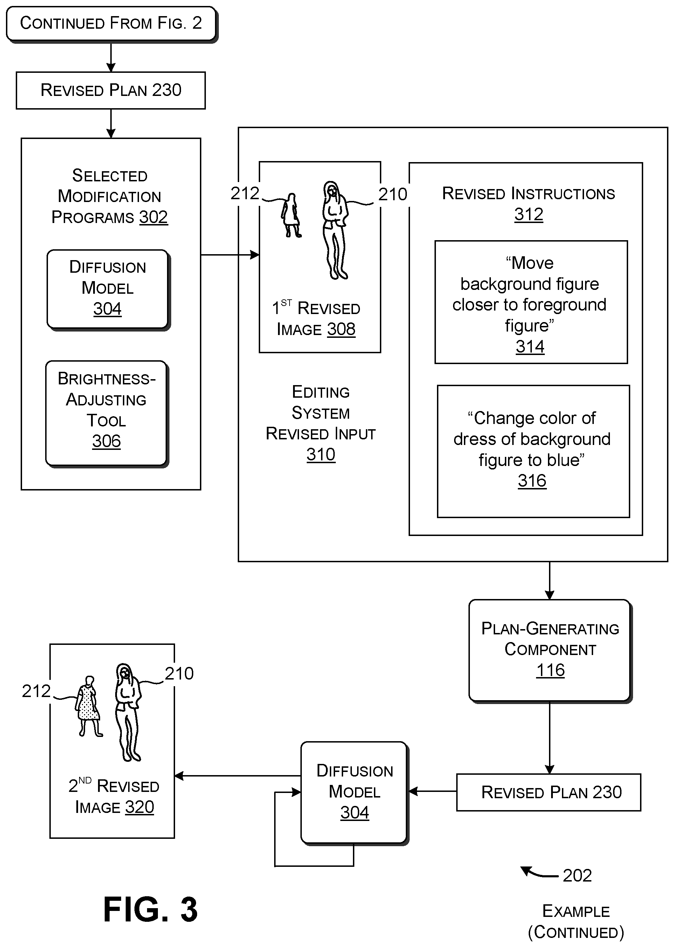

Continuing in Fig. 3, the controller 108 invokes two modification programs 302 to carry out actions in the revised action plan 230. The first modification program is a diffusion model 304 and the second modification program is a brightness-adjusting tool 306. The transformations performed by the modification programs 302 produce a revised image 308. As requested, the revised image 308 relocates the background person 212 to the other side of the foreground person 210. Further, as requested, the revised image 308 exhibits increased brightness relative to the original image 206.

In the example 202, a next input 310 to the editing system 102 includes the revised image 308 and revised instruction 312. The revised instruction 312 includes a first instruction 314 to "Move the background figure closer to the foreground figure," and a second instruction 316 to "Change color of the dress of the background figure to blue." In this example, the user manually inputs both the first instruction 314 and the second instruction 316, ignoring any suggestion (not shown) that may be generated by the suggestion-generating model 122.

The plan-generating model 142 generates a further-revised action plan 318 based on this revised input 310 that specifies two actions to be performed by the diffusion model 304. The diffusion model 304 may execute these two actions at the same time, or in a specified order, to produce a further-revised image 320.

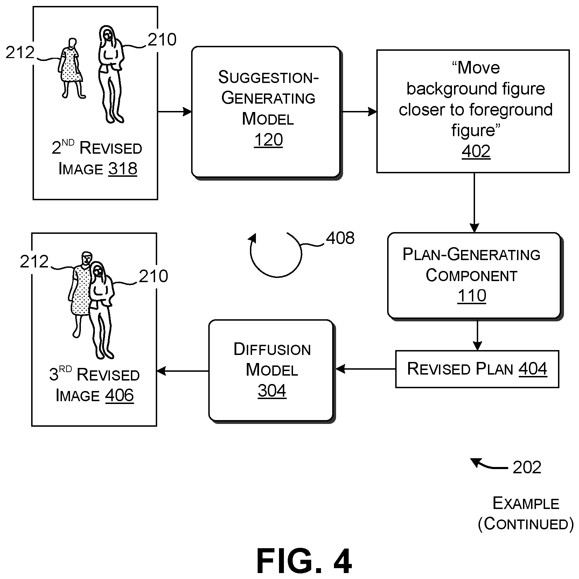

Advancing to Fig. 4, the suggestion-generating model 122 generates a suggestion 402 based on the further-revised image 320 that specifies, "Move background figure closer to the foreground figure." The user chooses this suggestion 402, upon which the plan-generating model 142 generates a further-revised action plan 404. The diffusion model 304 generates a further-revised image 406 based on the further-revised action plan 404. The loop 408 indicates that the editing system 102 and the user may repeat the above-process one or more times, each time adjusting the position of the background person 212 relative to the position of the foreground person 210 and/or making other changes. In other implementations, the editing system 102 performs the above iterative processing without asking the user to approve the change. The editing system 102 may opt for this manner of processing based on a configuration setting and/or based on its conclusion that a current instance of the revised image has a deficiency that qualifies for automatic correction (e.g., as when a portion of the further-revised image is corrupted by an artifact caused by a change that has been made).

The editing system 102 is resource efficient for at least three reasons. First, the plan-generating model 142 is able to refine its results over any number of iterations (as demonstrated in Figs. 2-4), which reduces the need for a larger plan-generating model that is built to correctly carry out an initial instruction in a single pass. Reducing the size of the plan-generating model 142 reduces its consumption of memory and processor resources. This is because decreasing the number of parameters (which is one factor that defines a model's size) reduces the amount of memory that is needed to store the parameters and reduces the processing load that is required to perform calculations associated with the parameters. Second, the training system 126 trains the plan-generating model 142 based on a set of training examples that target one or more classes of complex instructions. One set of training examples is directed to the kind of relative movement between objects demonstrated in Figs. 2-4. This training reduces the number of iterations that need to be performed by the editing system 102 to achieve satisfactory results. Third, the editing system 102 relies, at least in part, on existing modification programs 120, e.g., that may already be installed on a computing system. This reduces the need for the computing system to download specialized modification programs that work in conjunction with the plan-generating model 142.

In some examples, the above efficient use of resources enables a local computing system (e.g., a user device) to locally implement the editing system 106. Local implementation of the editing system 106 is beneficial because: a) it reassures users that their input information will remain private; b) it enables operation at those times when an online connection is not available; and c) it reduces latency by eliminating interaction with a server-side system.

The editing system 102 is also modular and scalable because it can adapt to the introduction of new models without necessarily requiring retraining of existing models. For example, the plan-generating model 142 does not necessarily require retraining upon the introduction of new preprocessing models and/or new modification programs. For example, the plan-generating model 142 is able to accommodate the introduction of a new object detector providing that the new object detector formulates its output results in the same manner as existing object detectors (e.g., using bounding box information and text-based object class information). The editing system 102 is able to accommodate the introduction of a new modification program by registering a description of the new modification program in the retrieval component 118. The editing system 102 can continue to match plans against an updated set of available modification programs accessible via the retrieval component 118 without requiring any changes to the plan-generating model 142.

### B. Illustrative Training System.

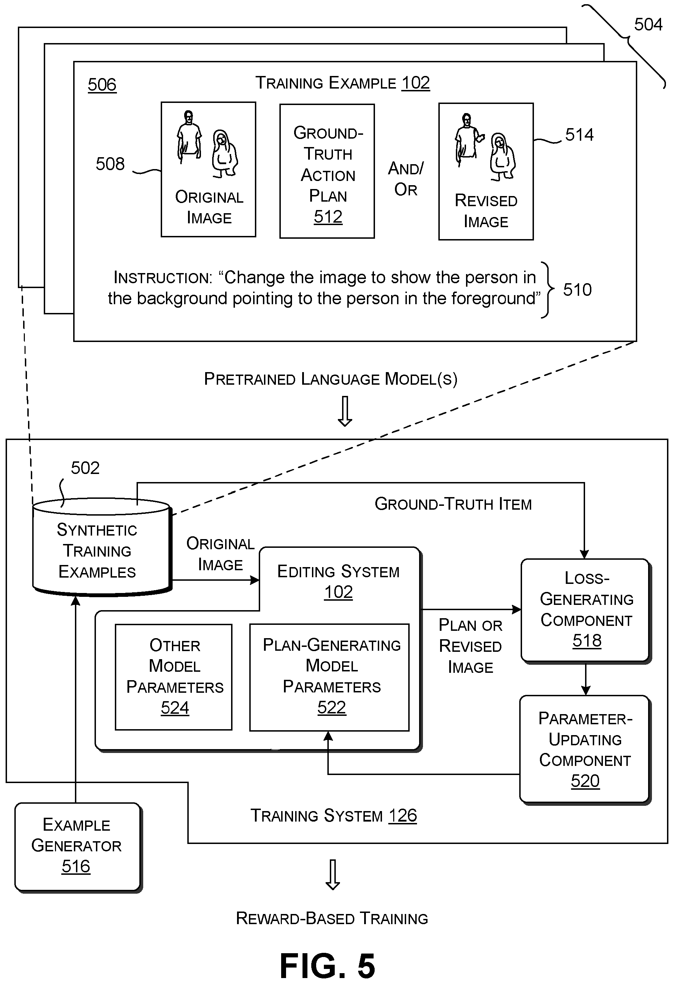

Fig. 5 shows one implementation of the training system 126, the purpose of which is to train the parameters of the editing system 102. More specifically, in some implementations, the training system 126 is dedicated to the task of training the parameters of the plan-generating model 142 and the suggest-generating model 122 (which may be the same language model or different respective language models). The parameters of other models in the editing system 102, including the parameters of the preprocessing system 110 and the parameters of the modification programs 120, remain fixed throughout this training. In other words, the editing system 102 uses the models of the preprocessing system 110 and the modification programs 120 as given, without fine-tuning their parameters for use within the editing system 102. In other implementations, the training system 126 fine-tunes at least some of the models of the preprocessing system 110 and/or the modification programs 120.

In some implementations, the training system 126 trains the parameters of the parameter-generating model 142 in two or more stages. Fig. 5 shows details of a fine-tuning stage, which involves fine-tuning the parameters of a pretrained language model based on a set of training examples (in a data store 502). In some examples, the pretrained language model corresponds to a LLaMA model in the family of open-source LLaMA models provided by META PLATFORMS, INC., or a PHI model in the family of PHI models provided by MICROSOFT CORPORTION, e.g., as referenced in Abdin, et al., "Phi-3 Technical Report: A Highly Capable Language Model Locally on Your Phone," Models," arXiv, arXiv:2404.14219v4 [cs.CL], August 30, 2024, 24 pages.

The training examples in the data store 502 include one or more subsets of training examples dedicated to tasks that have been traditionally regarded as complex. One such subset 504 of training examples is dedicated to a class of instructions that involves moving at least two objects in an input image relative to each other. In some cases, the requested movement involves moving a first body part relative to a second body part, or more generally, moving one or more bodies relative to some reference point.

For example, an example 506 of this type includes an example image 508 that shows at least two people standing at an initial distance from each other. An example instruction 510 specifies: "Change the image to show the person in the background pointing to the person in the foreground." The example 506 also includes a ground-truth action plan 512 and/or a ground-truth revised image 514. The ground-truth action plan 512 includes a sequence of actions, specified in text, that correctly carry out the instruction 510 when implemented by one or more modification programs. The ground-truth action plan 512 specifies movement information in any manner, such as by specifying bounding associated with image content to be modified, before and after the requested action. The ground-truth revised image 514 correctly shows the transformation specified in the instruction 510. Note that this specific example shows movement of body parts, but an instruction may request a change in the pose of any type of object (or objects) in an image.

An automated agent may have difficulty correctly carrying out an instruction of the above type because it involves correctly interpreting both what is depicted in an image and what the user is requesting. The request also requires carrying out complex interdependent movements. For example, consider a request to move the two hands of a person depicted in the image closer to each other. Movement of the left hand of the user influences how much the right hand of the person should be moved, and vice versa. While it is relatively easy for a human to understand this command, it may be difficult for an automated agent to generate a sequence of actions that correctly carries out this movement.

In some examples, an example generator 516 automatically generates the training examples in the subset 504 of training examples. The training examples are synthetic insofar as they are generatively produced, as opposed to obtained from an empirical source (although it also possible include some training examples obtained from one or more empirical sources). For instance, the example generator 516 uses a generative language model to randomly generate a batch of textual instructions, given a system prompt that specifies the permissible variations in textual instructions. For example, with respect to a single person, a system prompt requests the generative model to generate a batch of instruction that change the position of a body part of the person relative to at least one other body part of the person. Another system prompt requests the generative model to vary at least one body part of a person relative to another object in an image, such as another person or an inanimate object. A graphics pipeline (e.g., provided by a computer-generated imagery (CGI) tool) then carries out each instruction to produce a pair that includes a particular original image and a counterpart revised image, such as the original image 508 and the revised image 514 of the example 506. AUTODESK MAYA is one example of a CGI tool, provided by AUTODESK INC. of San Francisco, California. The example generator 516 also stores a textual description of the transformations that have been produced. For instance, the textual description describes a series of bounding boxes associated with movement of objects from the original image 508 to the revised image 514.

In some implementations, the example generator 516 calls another generative language model and/or a rules-based program to produce a textual action plan for each pair of an original image and a counterpart revised image. The generative model and/or rules-based program is also guided by the accompanying textual description that describes how the original image is transformed into the revised image. The action plan specifies a sequence of actions performed by one or more modification programs that would be successful in transforming the original image into the counterpart revised image. Alternatively, or in addition, a human user produces a ground-truth action plan for each pair of an original image and a counterpart revised image.

Fig. 5 also illustrates the operation of training system 126, in performing supervised fine-tuning, with respect to the illustrative example 506. In actual practice, however, the training system 126 performs training on a batch of training examples. The editing system 102 maps the example image 508 and the instruction 510 into a model-generated action plan and a model-generated revised image. A loss-generating component 518 computes the difference between the model-generated action plan and the ground-truth action plan 512 and/or the difference between the model-generated revised image and the ground-truth revised image 514. The loss-generating component 518 can compute the difference between two tokens (e.g., two text tokens or two image tokens) by using any distance metric (such as cosine similarity) to determine the similarity between the embeddings associated with the two tokens. With respect to a batch as a whole, the loss-generating component 518 is capable of expressing loss information using any loss function, including cross entropy, Kullback-Leibler (KL) divergence, contrastive loss, etc. A parameter-updating component 520 uses any approach to update the parameters 522 of the plan-generating model 142 based on the loss information, such as stochastic gradient descent in combination with back propagation. In some implementations, the parameters 524 of the other models of the editing system 102 are fixed or frozen, meaning that they are not updated.

Although not shown in Fig. 5, the training system 126 updates the parameters of the suggestion-generating model 122 using supervised fine-tuning in a similar manner to that described above. Here, each training example in a set of training examples includes an input item and a set of one or more ground-truth suggestions. In some implementations, the examples are collected from actual instructions provided by end users in previous interactions with the editing system 102 (if this use is authorized by the end users). The training system 126 updates the parameters of the suggestion-generating model 122 by: a) generating model-generating suggestions for example original items; b) comparing the model-generated suggestions with the ground-truth suggestions, to produce loss information; and c) updating the parameters of the suggestion-generating model 122 based on the loss information.

In some implementations, the training system 126 further refines the parameters of the plan-generating model 142 and/or the suggestion-generating model using reward-based training. Examples of reward-based training include Proximal Policy Optimization (PPO) and Direct Preference Optimization (DPO). DPO training applies the following loss function: ${L}_{DPO} \left({π}_{θ}, {π}_{ref}\right) = - {E}_{D} \left[logσ\left(βlog\frac{{π}_{θ} \left(\left.{y}_{p}\right|x\right)}{{π}_{ref} \left(\left.{y}_{p}\right|x\right)}-βlog\frac{{π}_{θ} \left(\left.{y}_{n}\right|x\right)}{{π}_{ref} \left(\left.{y}_{n}\right|x\right)}\right)\right]$ (1).

In the present context, the training system 126 uses the editing system 102 being trained to generate model-generated actions plans for plural instructions. *π_{θ}*(*yₚ*|*x*) identifies the probability associated with a positive action plan *yₚ* for an instruction *x* and *π_{θ}*(*yₙ*|*x*) identifies the probability associated with a negative action plan *yₙ* for the same request x. (Note that the editing system 102 produces a distribution of probabilities associated with respective action plans, and the probabilities of individual plans are obtained from this distribution.) The training system 102 then uses the training system 126, with its models fixed at their initial state at the start of reward-based training, to generate counterpart probabilities (*π_{ref}*(*yₚ*|*x*), *π_{ref}*(*yₙ*|*x*)). The inclusion of these reference (*ref*) probabilities in the above equation helps stabilize the reward-based training, e.g., by preventing it from diverging too far from the knowledge gained through the previous stages of training. *σ* refers to the logistic sigmoid function, *β* is an environment-specific hyper-parameter, and 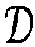 refers to the set of training examples.

In some implementations, reward-based training is also used to revise the parameters of the suggestion-generating model 122. In this training, *yₚ* and *yₙ* correspond to positive (correct) and negative (incorrect) suggestions, given an input item *x*.

The use of the above-described synthetic training examples enables the editing system 102 to interpret and carry out requests to change the poses of objects in images, including changes that involve complex movement of one body part relative to another body part. This is because the training examples teach the plan-generating model 142 how to express complex movement in text-based plans, which, when carried out by selected modification programs, lead to the desired transformation. Other planning models do not decompose and articulate relative movement during training in the above-described manner, and therefore do not have the same capability as the editing system 102.

### C. Illustrative Processes

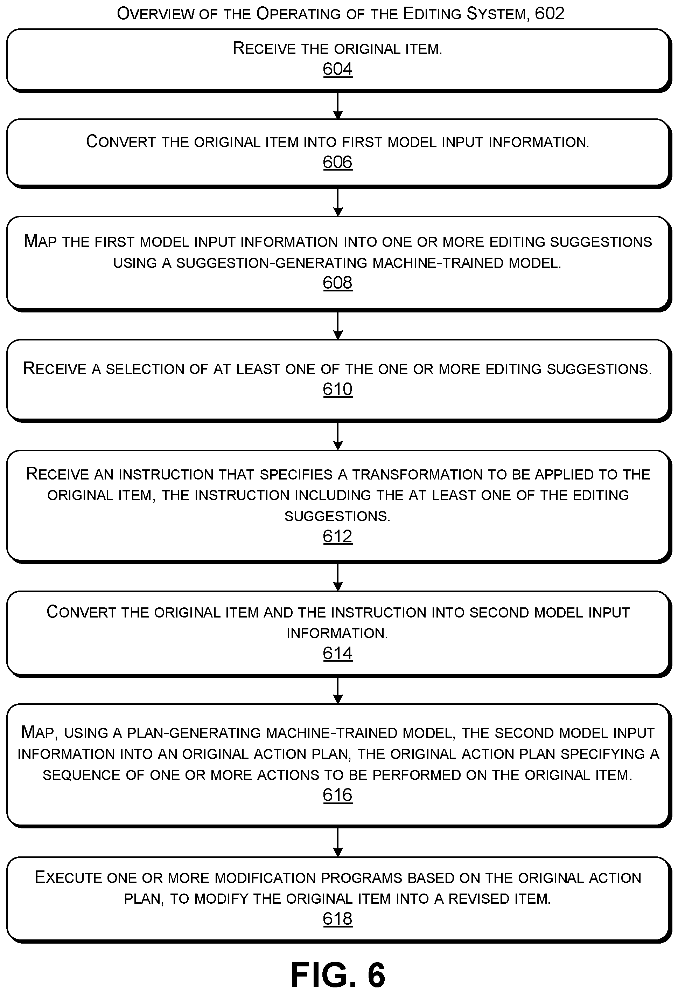

Figs. 6-8 show three processes that represent an overview of the operation of the systems of Sections A and B. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 13 and 14.

Fig. 6 shows a process 602, performed using the editing system 102, for revising an original item. In block 604, the editing system 102 receives the original item. In block 606, the editing system 102 converts the original item into first model input information. In block 608, the editing system 102 maps the first model input information into one or more editing suggestions using the suggestion-generating model 122. In block 610, the editing system 102 receives a selection of at least one of the one or more editing suggestions. In block 612, the editing system 102 receives an instruction that specifies a transformation to be applied to the original item, the instruction including the at least one of the editing suggestions. In block 614, the editing system 102 converts the original item and the instruction into second model input information. In block 616, the editing system 102 maps, using the plan-generating model 142, the second model input information into an original action plan, the original action plan specifying a sequence of one or more actions to be performed on the original item. In block 618, the editing system 102 executes one or more modification programs based on the original action plan, to modify the original item into a revised item.

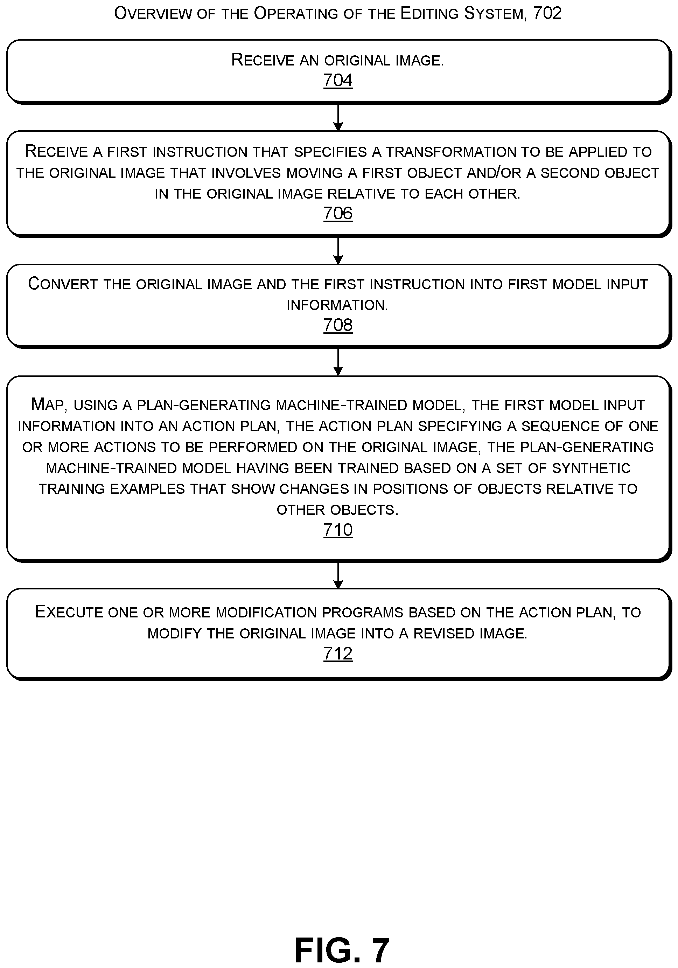

Fig. 7 shows another process 702, performed using the editing system 102, for revising an original image, governed by an action plan. In block 704, the editing system 102 receives the original image. In block 706, the editing system 102 receives a first instruction that specifies a transformation to be applied to the original image that involves moving a first object and/or a second object in the original image relative to each other. In block 708, the editing system 102 converts the original image and the first instruction into first model input information. In block 710, the editing system 102 maps, using the plan-generating model 142, the first model input information into an action plan, the action plan specifying a sequence of one or more actions to be performed on the original image. The plan-generating model has been trained based on a set of synthetically-produced training examples that show changes in positions of objects relative to other objects. In block 712, the editing system 102 executes one or more modification programs based on the action plan, to modify the original image into a revised image.

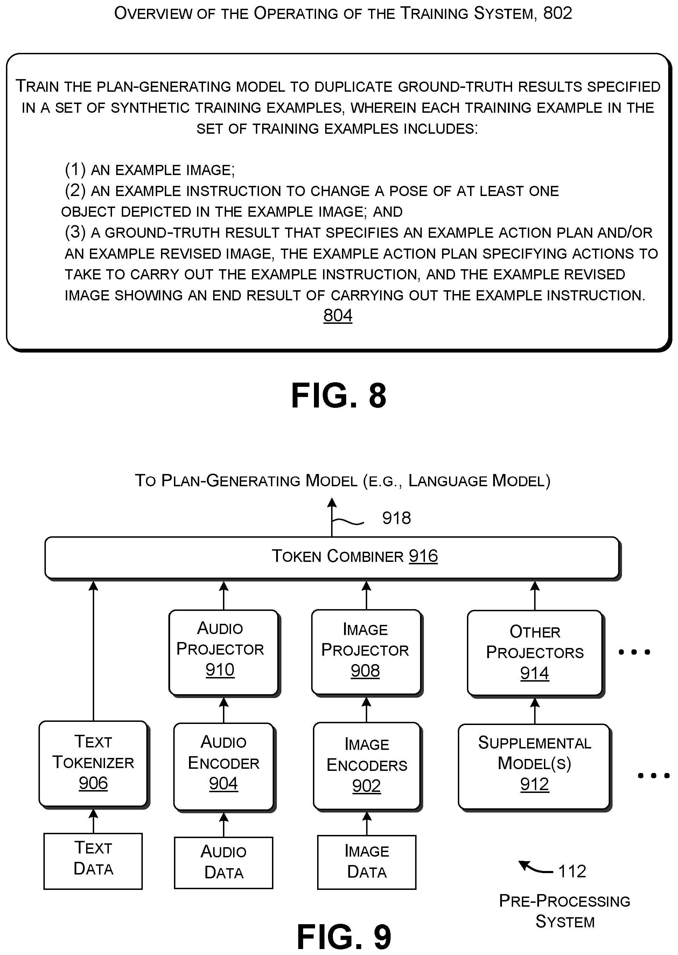

Fig. 8 shows a process 802 for training the plan-generating model 142. In block 804, the training system 126 trains the plan-generating model 142 to duplicate ground-truth results specified in a set of synthetic-produced training examples. Each training example in the set of training examples includes: an example image; an example instruction to change a pose of at least one object depicted in the example image; and a ground-truth result that specifies an example action plan and/or an example revised image. The example action plan specifies actions to take to carry out the example instruction, and the example revised image shows an end result of carrying out the example instruction.

### D. Illustrative Models

Fig. 9 shows one implementation of a preprocessing system 110 used by the editing system 102 of Fig. 1. The function of the preprocessing system 110 is to convert the different components of an input request into encoded information, which is subsequently feed to the plan-generating model 142.

The processing system 110 includes an image encoder 902 for mapping each image (if any) of the request into image tokens. In some examples, the image encoder 902 breaks an image input image into a series of image patches, such as 16 image patches. The image encoder 902 then uses any kind of neural network to map the image tokens into respective image embeddings. For example, the neural network is a convolutional neural network (CNN) or a transformer-based language model. In other examples, the image encoder 902 uses a CNN (e.g., a ResNet CNN) to map each pixel of an image to an embedding vector.

An optional audio encoder 904 converts a stream of raw audio data into audio embeddings. For example, the audio encoder 904 converts the audio data into a stream of audio features, organized into a series of audio frames. For instance, the audio features correspond to Mel-frequency cepstral coefficients (MFCCs). The audio encoder 904 then maps the audio features into audio embeddings using any kind of neural network. In other examples, the audio encoder 904 produces a logarithm melspectrogram based on the audio data, and then partitions the melspectrogram into individual patches, akin to the above-summarized case of image processing. The individual patches constitute audio tokens. The audio encoder 904 then uses any type of neural network (e.g., a transformer-based model) to convert the audio tokens into the audio embeddings. In other examples, the preprocessing system 110 uses a publicly available speech encoder, such as the WHISPER encoder provided by OPEN AI. In other implementations, a speech-to-text converter first converts the audio data into text data, and then uses a text encoder 906 to produce the audio embeddings.

The text encoder 906 maps text data (if used) into text embeddings. The text encoder 906 performs this task using any tokenizing algorithm, such as the byte pair encoding (BPE), WordPiece, or SentencePiece algorithms. The text encoder 906 maps codes associated with the text tokens into text embeddings, e.g., using a machine-trained linear transformation. The text embeddings are combined with position information to describe the positions of their corresponding tokens in the input text.

An image projector 908 maps the image embeddings produced by the image encoder 902 into embeddings in the same vector space as the text encoder 906. Similarly, an audio projector 910 maps the audio embeddings produced by the audio encoder 904 into the same vector space as the text encoder 906.

In some implementations, the preprocessing system 110 also includes one or more supplemental models 912 that perform more specific item-processing tasks compared to the above-described encoders. For instance, with respect to an input image, the supplemental models 912 include any of: an object detector, a segmentation model, a pose detector, etc. With respect to an input passage of text, the supplemental models 912 include any of: a summarization model, a style converter model, an entity classification model, etc. In some examples, these supplemental models 912 operate on the encoded information produced by the above-described encoders. The supplemental models 912 produce model-specific output results. For example, an object detector will produce encoded output information that identifies the bounding boxes of detected objects, and classification information that identifies the semantic classes of the detected objects. One or more other projectors 914 project the output results of the supplemental models 912 to the same vector space as the text encoder 906.

A token combiner 916 combines the different kinds of tokens together (e.g., via concatenation), to form combined output information 918. The combined output information 918 is encoded with position information that describes the positions of individual tokens in a sequence of tokens, e.g., by describing the positions of image patches within an image.

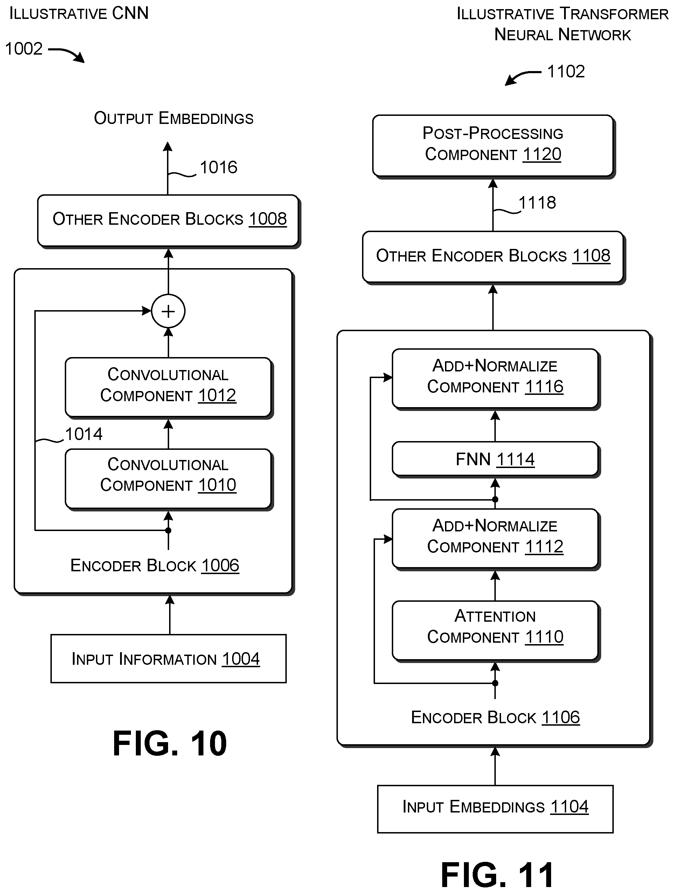

Fig. 10 shows a convolutional neural network (CNN) 1002 that is capable of carrying out one or more operations in the editing system 102 of Fig. 1. In some contexts, the CNN 1002 operates on input information 1004 that describes pixels or patches in an input image. In other contexts, the input information 1004 represents a passage of text.

The CNN 1002 includes a pipeline that includes plural encoder blocks (e.g., encoder blocks 1006, 1008) optionally interspersed with pooling components, not shown). Fig. 10 specifically shows the illustrative case in which the representative encoder block 1006 includes a pair of convolutional components (1010, 1012). Fig. 10 also shows an optional residual connection 1014 that adds input information fed to the first convolutional component 1010 to output information produced by the second convolutional component 1012. The topmost layer of the CNN 1002 produces output embeddings 1016.

Each convolutional component performs a convolution operation that involves moving an *n* × *m* kernel (e.g., a 3 × 3 kernel) across feature information supplied to the convolutional component. At each position of the kernel, the convolutional component generates the dot product of the kernel values with the underlying values of the feature information. Each pooling component (not shown) down-samples results of a preceding convolutional operation using some sampling function, such as, for example, a maximum operation that selects a maximum value within a subset of values.

Although not shown, the CNN 1002 can include any type of post-processing component that performs further operations on the output embeddings 1016, such a classification operation using a linear layer and a Softmax function (e.g., a normalized exponential function).

Fig. 11 shows an illustrative transformer-based language model ("language model") 1102 that can be used to implement parts of the editing system 102 of Fig. 1. For example, the plan-generating model 142 and/or the suggestion-generating model 122 are each implemented by the type language model 1102 shown in Fig. 11. In these examples, the language model 1102 operates on encoded input embeddings 1104 produced by the preprocessing system 110.

The language model 1102 includes a pipeline of encoder blocks (1106, 1108). A first encoder block 1106 operates on the input embeddings 1104, and includes, in order, an attention component 1110, a first add-and-normalize component 1112, a feed-forward neural network (FFN) component 1114, and a second add-and-normalize component 1116.

The attention component 1110 determines how much emphasis should be placed on parts of input information when interpreting other parts of the input information. In some examples, the attention component 1110 performs attention analysis using the following equation: $Attention \left(Q, K, V\right) = softmax \left(\frac{{QK}^{T}}{\sqrt{{d}_{k}}}\right) V$ (2).

The attention component 1110 produces query information Q by multiplying the input embeddings 1104 by a query weighting matrix *W^{Q}*. Similarly, the attention component 1110 produces key information *K* and value information *V* by multiplying the input embeddings 1104 by a key weighting matrix *W^{K}* and a value weighting matrix *W^{V},* respectively. To execute Equation (2), the attention component 1110 takes the dot product of *Q* with the transpose of *K,* and then divides the dot product by a scaling factor $\sqrt{d}$, to produce a scaled result. The symbol d represents the dimensionality of *Q* and *K.* The attention component 1110 takes the Softmax (normalized exponential function) of the scaled result, and then multiplies the result of the Softmax operation by V, to produce attention output information.

Although not shown, in some examples, the first encoder block 1106 includes plural attention components associated with plural heads. Each attention head performs the computations specified by Equation (2), but with respect to a particular representational subspace that is different than the subspaces of the other attention heads. The first encoder block 1106 concatenates the output results of the separate attention heads, and then multiplies the results of this concatenation by another weight matrix *W^{O}*.

The add-and-normalize component 1112 includes a residual connection that combines (e.g., sums) input information fed to the attention component 1110 with the output information generated by the attention component 1110. The add-and-normalize component 1112 then normalizes the output information generated by the residual connection. The other add-and-normalize component 1116 performs the same functions as the first-mentioned add-and-normalize component 1112. The FFN component 1114 transforms input information to output information using a feed-forward neural network having any number of layers. A final layer of the last encoder block produces output embeddings 1118.

In some implementations, a post-processing component 1120 performs post-processing operations on the output embeddings 1118. For example, the post-processing component 1120 performs a machine-trained linear transformation on the final output embeddings 1118, and processes the results of this transformation using a Softmax component (not shown). The language model 1102 uses the output of the post-processing component 1120 to predict the next token in the input sequence of tokens or to perform some other function (e.g., a classification function). In some implementations, the language model 1102 operates autoregressively. To operate in this way, the language model 1102 appends a predicted token to the end of the sequence of input tokens, to provide an updated sequence of tokens. In a next pass, the language model 1102 processes the updated sequence of tokens to generate a next predicted token.

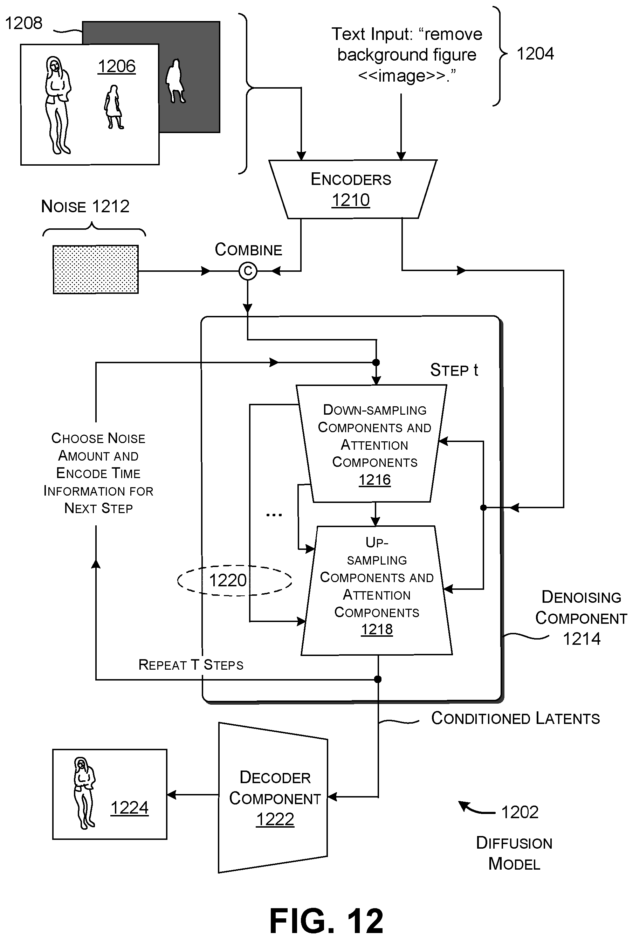

Fig. 12 shows an illustrative diffusion model that is capable of carrying out one or more operations in the editing system 102 of Fig. 1. In some examples, the action plan produced by the plan-generating component 116 feeds the diffusion model 1202 a passage of text 1204, an input image 1206, and segmentation information 1208 (such as a mask). Here, the input image 1206 is supplied by a user. The text 1204 specifies an instruction that the background person in the input image 1206 should be removed. In some implementations, the preprocessing system 110 automatically produces the segmentation information 1208 (e.g., the mask) to demarcate the portion of the input image 1206 that corresponds to the background person in the image 1206.

One or more encoders 1210 transform the text 1204, the input image 1206, and the segmentation information 1208 into respective instances of embedding information. The diffusion model 1202 also receives input noise 1212, which constitutes latent seed information. The diffusion model 1202 combines the noise 1212 with the image embeddings, to produce noisy image embeddings.

A denoising component 1214 operates on the noisy image embeddings in a series of T steps. In each step, the denoising component 1214 identifies and removes some noise from the noisy image embeddings. The amounts of noise removed in different steps are not the same and is governed by a schedule. The processing performed by each step is also conditioned by the instruction given by the text 1204 and the segmentation information 1208, which specifies how the input image 1206 is to be revised.

In some implementations, a U-Net neural network performs each step of the denoising process. The U-Net neural network includes a series of down-sampling components 1216 followed by a series of up-sampling components 1218. Each down-sampling component decreases the size of the image information fed to it, and each up-sampling component increases the size of the image information fed to it. Skip connections 1220 connect information provided by different layers of the down-sampling components 1216 to associated levels of the up-sampling components 1218. In some implementations, each of the down-sampling components 1216 and up-sampling components 1218 are implemented by convolutional neural networks. The convolutional neural networks are interspersed with attention components that performs cross-attention, guided by the text 1204 and the segmentation information 1208.

A decoder component 1222 converts the latent-space output embeddings produced by the denoising component 1214 into an output image 1224. In some implementations, the decoder component 1222 is a decoder of a variational autoencoder.

The training of a diffusion model involves a forward diffusion process and a reverse diffusion process. In the forward diffusion process, a training system adds Gaussian noise to images in a succession of steps (e.g., 50 to 100 steps in some examples). A schedule governs how much noise is added in each step. In the reverse diffusion process, the training system predicts the amount of noise in image content in a succession of steps and removes that predicted noise over the succession of steps. Both the forward diffusion process and the reverse diffusion process are Markov chains, in which each state solely depends on its previous state. Training involves, for individual steps, computing the differences between the predicted amounts of noise computed in the reverse process and the actual amounts of noise added in the forward diffusion process, and adjusting the weights of the diffusion model to improve the diffusion model's subsequent ability to predict noise. Through this process, the diffusion process learns how to reconstruct meaningful image content, given an input image containing random noise.

In other implementations, another type of image-synthesizing model is used instead of, or in addition to, a diffusion model. For example, another type of image-synthesizing model relies on a generative adversarial network (GAN).

### E. Illustrative Computing Functionality

Fig. 13 shows computing equipment 1302 that, in some implementations, is used to implement the editing system 102 and/or the training system 126 of Figs. 1 and 5, respectively. The computing equipment 1302 includes a set of local devices 1304 coupled to a set of servers 1306 via a computer network 1308. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, an immersive "cave," a media device, a vehicle-borne computing system, any type of robot computing system, a computing system in a manufacturing system, etc. In some implementations, the computer network 1308 is implemented as a local area network, a wide area network (e.g., the Internet), one or more point-to-point links, or any combination thereof.

The bottom-most overlapping box in Fig. 13 indicates that the functionality of the editing system 102 and/or the training system 126 is capable of being spread across the local devices 1304 and/or the servers 1306 in any manner. In one example, the editing system 102 is entirely implemented by a local device. In another example, the functions of the editing system 102 are entirely implemented by the servers 1306. Here, a user is able to interact with the servers 1306 via a browser application running on a local device. In other examples, some of the functions of the editing system 102 are implemented by a local device, and other functions of the editing system 102 are implemented by the servers 1306. The training system 126 can similarly be implemented in various ways, such as entirely by local device, entirely by the servers 1306, or by a combination of one or more local devices and the servers 1306.

Fig. 14 shows a computing system 1402 that, in some implementations, is used to implement any aspect of the mechanisms set forth in the above-described figures. For instance, in some implementations, the type of computing system 1402 shown in Fig. 14 is used to implement any local computing device or any server shown in Fig. 13. In all cases, the computing system 1402 represents a physical and tangible processing mechanism.

The computing system 1402 includes a processing system 1404 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1402 also includes computer-readable storage media 1406, corresponding to one or more computer-readable media hardware units. The computer-readable storage media 1406 retains any kind of information 1408, such as machine-readable instructions, settings, model weights, and/or other data. In some implementations, the computer-readable storage media 1406 includes one or more solid-state devices, one or more hard disks, one or more optical disks, etc. Any instance of the computer-readable storage media 1406 represents a fixed or removable unit of the computing system 1402. Further, any instance of the computer-readable storage media 1406 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1402 utilizes any instance of the computer-readable storage media 1406 in different ways. For example, in some implementations, any instance of the computer-readable storage media 1406 represents a hardware memory unit (such as random access memory (RAM)) for storing information during execution of a program by the computing system 1402, and/or a hardware storage unit (such as a hard disk) for retaining/archiving information on a more permanent basis. In the latter case, the computing system 1402 also includes one or more drive mechanisms 1410 (such as a hard drive mechanism) for storing and retrieving information from an instance of the computer-readable storage media 1406.

In some implementations, the computing system 1402 performs any of the functions described above when the processing system 1404 executes computer-readable instructions stored in any instance of the computer-readable storage media 1406. For instance, in some implementations, the computing system 1402 carries out computer-readable instructions to perform each block of the processes described with reference to Figs. 6-8. Fig. 14 generally indicates that hardware logic circuitry 1412 includes any combination of the processing system 1404 and the computer-readable storage media 1406.

In addition, or alternatively, the processing system 1404 includes one or more other configurable logic units that perform operations using a collection of logic gates, such as field-programmable gate arrays (FPGAs), etc. In these implementations, the processing system 1404 effectively incorporates a storage device that stores computer-readable instructions, insofar as the configurable logic units are configured to execute the instructions and therefore embody or store these instructions.

In some cases (e.g., in the case in which the computing system 1402 represents a user computing device), the computing system 1402 also includes an input/output interface 1414 for receiving various inputs (via input devices 1416), and for providing various outputs (via output devices 1418). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1420 and an associated graphical user interface presentation (GUI) 1422. The display device 1420 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1402 also includes one or more network interfaces 1424 for exchanging data with other devices via one or more communication conduits 1426. One or more communication buses 1428 communicatively couple the above-described units together.

The communication conduit(s) 1426 is implemented in any manner, e.g., by a local area computer network, a wide area computer network (e.g., the Internet), point-to-point connections, or any combination thereof. The communication conduit(s) 1426 include any combination of hardwired links, wireless links, routers, gateway functionality, name servers, etc., governed by any protocol or combination of protocols.

Fig. 14 shows the computing system 1402 as being composed of a discrete collection of separate units. In some cases, the collection of units corresponds to discrete hardware units provided in a computing device chassis having any form factor. Fig. 14 shows illustrative form factors in its bottom portion. In other cases, the computing system 1402 includes a hardware logic unit that integrates the functions of two or more of the units shown in Fig. 14. For instance, in some implementations, the computing system 1402 includes a system on a chip (SoC or SOC), corresponding to an integrated circuit that combines the functions of two or more of the units shown in Fig. 14.

The following summary provides a set of illustrative examples of the technology set forth herein.

(A1) According to one aspect, a method (e.g., the process 602), performed using a computing system (e.g., the editing system 102), is described for revising an original item. The method includes: receiving (e.g., in block 604) the original item; converting (e.g., in block 606) the original item into first model input information; mapping (e.g., in block 608) the first model input information into one or more editing suggestions using a suggestion-generating machine-trained model (e.g., the suggestion-generating model 122); receiving (e.g., in block 610) a selection of at least one of the one or more editing suggestions; receiving (e.g., in block 612) an instruction that specifies a transformation to be applied to the original item, the instruction including the at least one of the editing suggestions; converting (e.g., in block 614) the original item and the instruction into second model input information; mapping (e.g., in block 616), using a plan-generating machine-trained model (e.g., the plan-generating model 142), the second model input information into an original action plan, the original action plan specifying a sequence of one or more actions to be performed on the original item; and executing (e.g., in block 618) one or more modification programs (e.g., the modification programs 120) based on the original action plan, to modify the original item into a revised item.

(A2) According to aspects of A1, the original item includes one or more of: image content, video content, audio content, and/or text content.

(A3) According to aspects of any of A1 or A2, the converting the original item and the instruction into second model input information includes encoding the original item and the instruction using plural preprocessing models. The plural preprocessing models extract different characteristics from the original item and the instruction.

(A4) According to aspects of A3, the original item is an image, and the plural preprocessing models include any two or more of: an image encoder; an image segmentation model; an object detector model; and/or a pose detector model.

(A5) According to aspects of any of A1-A4, the method further includes: retrieving modification information from a data store that identifies the one or more modification programs to be applied to the original item; and generating, using the plan-generating machine-trained model, a revised action plan based on the original action plan and the modification information. The invoking is performed based on the revised action plan.

(A6) According to aspects of A5, the modification information also describes interfaces provided for the one or more modification programs.

(A7) According to aspects of any of A1-A6, the method further includes: converting the revised item into third model input information; and mapping the third model input information into one or more updated editing suggestions using the suggestion-generating machine-trained model. The one or more updated editing suggestions specify modifications to be performed on the revised item.

(A8) According to aspects of any of A1-A6, the method further includes: receiving another instruction that specifies a transformation to be applied to the revised item; converting the revised item and the another instruction into third model input information; mapping, using the plan-generating machine-trained model, the third model input information into another action plan, the another action plan specifying a sequence of one or more actions to be performed on the revised item by at least one modification program; and executing the at least one modification program based on the another action plan, to modify the revised item into a further-revised item.

(A9) According to aspects of any of A1-A8, the method further includes: maintaining state information that describes a history of operations that have been performed in revising the original item. Each instance of mapping is also based on a current instance of state information.

(A10) According to aspects of any of A1-A9, the original item is an image, and one of the one or more modification programs is an image-synthesizing model, and the invoking includes using the image-synthesizing model to perform any one or more of: adding a first object to the image, removing an existing second object from the image, and/or changing a visual appearance of an existing third object in the image.

(A11) According to aspects of any of A1-A10, the original item is an image that depicts at least one object, and the instruction involves a change in a pose of the at least one object.

(A12) According to aspects of any of A1-A11, the original item is an image that depicts at least two objects, and the instruction specifies a change in positional relationship between the at least two objects.

(A13) According to aspects of A12, the at least two objects are two body parts of one or more bodies depicted in the image.

(A14) According to aspects of any of A1-A13, the plan-generating machine-trained model has been trained to duplicate ground-truth results specified in a set of synthetically-produced training examples. Each training example in the set of training examples includes: an example image; an example instruction to change a pose of at least one object depicted in the example image; and a ground-truth result that specifies an example action plan and/or an example revised image, the example action plan specifying actions to take to carry out the example instruction, and the example revised image showing an end result of carrying out the example instruction.

In yet another aspect, some implementations of the technology described herein include a computing system (e.g., the computing system 1402) that includes a processing system (e.g., the processing system 1404) having a processor. The computing system also includes a storage device (e.g., the computer-readable storage media 1406) for storing computer-readable instructions (e.g., the information 1408). The processing system executes the computer-readable instructions to perform any of the methods described herein (e.g., any individual method of the methods of A1-A14).

In yet another aspect, some implementations of the technology described herein include a computer-readable storage medium (e.g., the computer-readable storage media 1406) for storing computer-readable instructions (e.g., the information 1408). A processing system (e.g., the processing system 1404) executes the computer-readable instructions to perform any of the operations described herein (e.g., the operations in any individual method of the methods of A1-A14).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1412 of Fig. 14. The term "logic" likewise encompasses various physical and tangible mechanisms for performing a task. For instance, each processing-related operation illustrated in the flowcharts of Figs. 6-8 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

This application claims priority to U.S. Patent Application 19/224,583 filed 30 May 2025, the entirety of which is hereby incorporated herein by reference for all purposes.

## Claims

1. A method, performed using a computing system, for revising an original item, comprising:
receiving (604) the original item;
converting (606) the original item into first model input information;
mapping (608) the first model input information into one or more editing suggestions using a suggestion-generating machine-trained model;
receiving (610) a selection of at least one of the one or more editing suggestions;
receiving (612) an instruction that specifies a transformation to be applied to the original item, the instruction including said at least one of the editing suggestions;
converting (614) the original item and the instruction into second model input information;
mapping (616), using a plan-generating machine-trained model, the second model input information into an original action plan, the original action plan specifying a sequence of one or more actions to be performed on the original item; and
executing (618) one or more modification programs based on the original action plan, to modify the original item into a revised item.

2. The method of claim 1, wherein the original item includes one or more of: image content, video content, audio content, and/or text content.

3. The method of claim 1,
wherein the converting the original item and the instruction into second model input information includes encoding the original item and the instruction using plural preprocessing models, and
wherein the plural preprocessing models extract different characteristics from the original item and the instruction.

4. The method of claim 3,
wherein the original item is an image, and
wherein the plural preprocessing models include any two or more of: an image encoder; an image segmentation model; an object detector model; and/or a pose detector model.

5. The method of claim 1, further comprising:
retrieving modification information from a data store that identifies the one or more modification programs to be applied to the original item; and
generating, using the plan-generating machine-trained model, a revised action plan based on the original action plan and the modification information,
wherein the invoking is performed based on the revised action plan.

6. The method of claim 5, wherein the modification information also describes interfaces provided for the one or more modification programs.

7. The method of claim 1, wherein the method further comprises at least one of:
(i) converting the revised item into third model input information; and
mapping the third model input information into one or more updated editing suggestions using the suggestion-generating machine-trained model,
wherein the one or more updated editing suggestions specify modifications to be performed on the revised item; or
(ii) receiving another instruction that specifies a transformation to be applied to the revised item;
converting the revised item and said another instruction into third model input information;
mapping, using the plan-generating machine-trained model, the third model input information into another action plan, said another action plan specifying a sequence of one or more actions to be performed on the revised item by at least one modification program; and
executing said at least one modification program based on said another action plan, to modify the revised item into a further-revised item.

8. The method of claim 1, further comprising:
maintaining state information that describes a history of operations that have been performed in revising the original item, and
wherein each instance of mapping is also based on a current instance of state information.

9. The method of claim 1,
(i) wherein the original item is an image, and wherein one of the one or more modification programs is an image-synthesizing model, and
wherein the invoking comprises using the image-synthesizing model to perform any one or more of: adding a first object to the image, removing an existing second object from the image, and/or changing a visual appearance of an existing third object in the image; or
(ii) wherein the original item is an image that depicts at least one object, and
wherein the instruction involves a change in a pose of the at least one object.

10. The method of claim 1, wherein the original item is an image that depicts at least two objects, and wherein the instruction specifies a change in positional relationship between said at least two objects; optionally wherein said at least two objects are two body parts of one or more bodies depicted in the image.

11. The method of claim 1,
wherein the plan-generating machine-trained model has been trained to duplicate ground-truth results specified in a set of synthetically-produced training examples,
wherein each training example in the set of training examples includes:
an example image;
an example instruction to change a pose of at least one object depicted in the example image; and
a ground-truth result that specifies an example action plan and/or an example revised image, the example action plan specifying actions to take to carry out the example instruction, and the example revised image showing an end result of carrying out the example instruction.

12. A computing system for revising an original image, governed by a action plan, comprising:
an instruction data store for storing computer-readable instructions; and
a processing system for executing the computer-readable instructions in the data store, to perform operations including:
receiving the original image;
receiving a first instruction that specifies a transformation to be applied to the original image that involves moving a first object and/or a second object in the original image relative to each other;
converting the original image and the first instruction into first model input information;
mapping, using a plan-generating machine-trained model, the first model input information into an action plan, the action plan specifying a sequence of one or more actions to be performed on the original image, the plan-generating machine-trained model having been trained based on a set of synthetically-produced training examples that show changes in positions of objects relative to other objects; and
executing one or more modification programs based on the action plan, to modify the original image into a revised image.

13. The computing system of claim 12, further comprising
converting the revised image into second model input information; and
mapping the second model input information into one or more editing suggestions using a suggestion-generating machine-trained model,
wherein the one or more editing suggestions specify modifications to be performed on the revised image that involve further movement of the first object and/or second object relative to each other;
optionally further comprising:
receiving a selection of at least one of the one or more editing suggestions;
receiving a second instruction that specifies a transformation to be applied to the revised image, the instruction including said at least one of the editing suggestions that has been selected;
converting the revised image and the second instruction into third model input information;
mapping, using a plan-generating machine-trained model, the third model input information into another action plan; and
executing at least one modification program based said another action plan, to modify the revised image into a further-revised image.

14. A computer-readable storage medium for storing computer-readable instructions, a processing system executing the computer-readable instructions to perform operations, the operations comprising:
receiving an original image;
receiving an instruction that specifies a transformation to be applied to the original image;
converting the original image and the instruction into model input information;
mapping, using a plan-generating machine-trained model, the model input information into an action plan, the action plan specifying a sequence of one or more actions to be performed on the original image; and
executing the one or more modification programs based on the action plan, to produce a revised image,
wherein the plan-generating machine-trained model has been trained to duplicate ground-truth results specified in a set of synthetically-produced training examples,
wherein each training example in the set of training examples includes:
an example image;
an example instruction to change a pose of at least one object depicted in the example image; and
a ground-truth result that specifies an example action plan and an example revised image synthetically produced by a graphics pipeline, the example action plan specifying actions to take to carry out the example instruction, and the example revised image showing an end result of carrying out the example instruction.

15. The computer-readable storage medium of claim 14,
wherein the converting the original item and the instruction into model input information includes encoding the original item and the instruction using plural preprocessing models, and
wherein the plural preprocessing models extract different characteristics from the original item and the instruction;
optionally wherein the plural preprocessing models include any two or more of: an image encoder; an image segmentation model; an object detector model; and/or a pose detector model.
